# EUROPEAN PATENT APPLICATION

(11) **EP 1 853 056 A1**
(43) Date of publication of application: **07.11.2007**
(21) Application number: 07104606.4
(22) Date of filing: 21.03.2007
(51) Int. Cl.: H04N 1/32

(54) **Information processing apparatus and method**

(30) Priority: 23.03.2006 JP 2006081488
(71) Applicant: Canon Kabushiki Kaisha, Ohta-Ku, Tokyo 146-8501 (JP)
(72) Inventor: Osaka, Hitoshi, Tokyo Tokyo 146-8501 (JP)
(74) Representative: TBK-Patent

(57) **Abstract**

An information processing apparatus, which executes a processing flow that defines cooperation processing of a plurality of tasks, determines, for each task, whether it can be executed in the current environment and executes the tasks determined to be executable, and, based on that, executes the processing flow within the executable range while saving the output data of the executed tasks. If, as a result of execution, it is impossible to complete a processing flow, the processing flow, along with inexecution information describing an unexecuted task, is registered as paused. The registered paused processing flow is then resumed based on the inexecution information and output data.

## Description

### BACKGROUND OF THE INVENTION

### Field of the Invention

The present invention relates to an information processing apparatus and method. More specifically, the present invention relates to a technology for executing task cooperation processing flows defining the cooperation processing of a plurality of tasks.

### Description of the Related Art

The term "task cooperation processing system" refers to a system capable of cooperatively executing various tasks using an information processing apparatus or a printing processing apparatus, including tasks that these apparatuses have.

It should be noted that, in the present specification, the term "task" refers to processing executable on document data, and primarily to processing that can be implemented using the various functions of a multi-functional printing processing apparatus. The expression "the task of a printing processing apparatus" refers, for instance, to copying, scanning, and faxing, saving to a hard disk inside or outside the printing processing apparatus, transferring to an external storage device, and e-mailing of document data, but it is not strictly limited thereto. Moreover, in addition to covering text data and image data as a matter of course, the term "document data" also covers moving picture data and audio data.

Moreover, in addition to a printing processing apparatus supplying the above-mentioned tasks, a task cooperation processing system can cooperate with a plurality of applications capable of supplying various tasks. Such applications may include tasks running on the printing processing apparatus, as well as tasks running on the information processing apparatus, such as a computer.

Moreover, in the present specification, the application and printing processing apparatus capable of carrying out such tasks are defined as a task processing apparatus. A task cooperation processing flow (occasionally called a "processing flow" below) is a combination of a series of several tasks created by interconnecting a plurality of tasks selected from among the above-described tasks for the purpose of processing in chronological order. A plurality of task processing apparatuses are used in the execution of a task cooperation processing flow. Combining tasks provides for processing utilizing the output results of tasks as inputs for executing other tasks, etc., thereby permitting implementation of various processing.

Generally speaking, such a task cooperation processing flow is created when task combinations and order are specified via the operation system of the printing processing apparatus or information processing apparatus, such as a computer. The created task cooperation processing flow is called by the information processing apparatus or printing processing apparatus itself and executed.

Moreover, systems are known wherein, after creating such task cooperation processing flows, the created task cooperation processing flows are accumulated in a shared server used for task cooperation processing flows (hereafter referred to as a "shared server"). The purpose of the shared server is to make task cooperation processing flows usable from various locations by various users. Consequently, a plurality of users can access the shared server from a plurality of printing processing apparatuses and computers at various locations, call a task cooperation processing flow from there, and execute the task cooperation processing flow on the destination equipment, onto which it has been called. Moreover, it can be said that another purpose of the shared server is to allow task cooperation processing flows created by one user to be re-used by other users by sharing the task cooperation processing flows among a plurality of users.

In a typical task cooperation processing flow processing system such as the one described above, task cooperation processing flows are based on the assumption that all of the processing is carried out at a single location in its entirety. There is no problem if at such time an entire task cooperation processing flow can be processed at once without any particular hindrance. On the other hand, if an error etc. is generated during the execution of a task cooperation processing flow, the following measures (error-handling countermeasures) can be considered in case of a typical processing system for task cooperation processing flows.

First of all, a method is suggested wherein the processing of the task cooperation processing flow is stopped if an error is generated during the course of processing and the execution of the flow is continued upon elimination of the cause of the error. For example, if an error (e.g. a paper jam) occurs in the course of execution of a task cooperation processing flow in a printing processing apparatus or another task processing apparatus, the processing flow is paused due to the error. Subsequently, upon elimination of the cause of the error, the execution of the processing flow is resumed. The interruption and resumption of such a flow is not particularly different from temporarily stopping processing in case of error generation in a printing processing apparatus and the like. Also, the handling of processing errors generated in a computer or another information processing apparatus would be similar.

Alternatively, halting the execution of the task cooperation processing flow in case of error generation is considered as another error-handling countermeasure. Alternatively, a method wherein the system skips the process (task) that causes the error and proceeds with the processing of the task cooperation processing flow is also suggested as an example of an error-handling countermeasure.

Each one of the several error-handling countermeasures described above is based on the assumption that "a flow whose execution has started is processed in its entirety within a single apparatus."

Moreover, JP H7-334572A describes processing that takes place when a work flow is temporarily stopped. According to this document, work flow execution is temporarily stopped in accordance with workflow correction instructions issued by higher levels and, upon modification of the flow, the execution of the work flow is continued. However, this example examines a temporary stop only and does not go beyond the concept that "a flow whose execution has started is processed in its entirety within a single location."

Incidentally, recent years have seen an increase in process re-engineering of office work environments. The term "process re-engineering" refers to an approach, wherein various office tasks, in particular, tasks related to document processing, are standardized and expressed in the form of rules. In this context, emphasis is placed on trying to maintain work efficiency and quality using processes compliant with ISO, CMM, and various other types of regulations and standards, and this tendency can be expected to become even stronger in the future.

If office process re-engineering continues to grow in the future, one can expect that there will be more opportunities for using task cooperation processing flows and that they will become more common. In such a case, it is perfectly imaginable for processing of all documents to be performed based on task cooperation processing flows. Namely, all office documents will go through a predetermined process.

In such a situation, documents and task cooperation processing flows will be closely associated and will become inseparable. On the other hand, even now, with the spread of mobile terminal devices and the like, it is not uncommon for users to handle documents while being away from the office. It is expected that demand will emerge for execution of task cooperation processing flows from a plurality of locations in situations where documentation is to be processed by pairing together documents and task cooperation processing flows, as described above. In such a case, the use of conventional task cooperation processing flows, which are predicated on completion of processing at a single location, may pose problems. A detailed discussion of this point is presented below.

As described above, even now, the odds of processing documents at locations remote from one's own office are quite high. The management of contracts and the like, which sales representatives prepare and start to process at a customer location, is suggested as an example. For instance, nowadays, situations may arise, in which possible business processing is started by sending contracts or other documents filled out at a customer location from an on-site device environment (e.g. from a convenience store's combo-type copy machine with communication functionality) to one's superiors as well as a business processing department at one's own company. Alternatively, situations can be considered, wherein information on documentation received at a branch office is sent to a headquarter department using the device environment at the branch office with the intent to immediately execute even just a portion of the business processing flow.

It is contemplated that there may be projects, wherein the processing of documents obtained or created at an on-site location remote from one's office is supposed to start immediately according to the process (task cooperation processing flow). However, when a representative who manages several projects cannot return to his or her office immediately, the task cooperation processing flow cannot be started. And even if it is executed up to a point, when there is a plurality of documents to be processed, problems will arise because management has to be done by establishing where the task cooperation processing flow ended on a document-by-document basis, which makes management difficult.

Problems arising in situations wherein documents are linked, as described above, to task cooperation processing flows in work environments subject to process engineering can be summarized as follows. For example, let us assume that document processing needs to be carried out by executing a task cooperation processing flow and there is a certain type of processing in the processing flow that can, and must, be carried out immediately at an on-site location. In such a case, the processing in the task cooperation processing flow that can, and must, be carried out on-site immediately is executed right away, and the task cooperation processing flow is executed later without the already executed processing (task). Accordingly, a need arises to ascertain, on a document-by-document basis, what kind of processing = which tasks have been executed, and up to which point. Such an ascertainment becomes more difficult as the number of projects at hand = documents increases, and it becomes harder to smoothly manage all of one's documents.

### SUMMARY OF THE INVENTION

The present invention was made with reference to the above-mentioned problems and the invention provides an apparatus and method which make it possible to start a task cooperation processing flow regardless of location and to easily manage its state of execution.

The present invention in its first aspect provides an information processing apparatus as specified in claims 1 to 9.

The present invention in its first aspect provides an information processing method as specified in claims 10 to 18.

Further features of the present invention will become apparent from the following description of exemplary embodiments with reference to the attached drawings.

### BRIEF DESCRIPTION OF THE DRAWINGS

Fig. 1 is a diagram used to explain an editing application for task cooperation processing flows according to an embodiment.

Fig. 2 is a diagram illustrating an exemplary user interface used for configuring the parameters of tasks contained in the task cooperation processing flow depicted in Fig. 1.

Fig. 3A is a block diagram illustrating an exemplary hardware configuration of an information processing apparatus used to execute task cooperation processing flows according to an embodiment.

Fig. 3B is a diagram illustrating an example of the data structure of media used to store task cooperation processing flows in an embodiment.

Fig. 3C is a diagram illustrating an example of a memory map produced by loading a task cooperation processing flow in an embodiment.

Fig. 3D is a diagram illustrating an example of a structure used when saving the data of a task cooperation processing flow in an embodiment.

Fig. 4 is a diagram illustrating an exemplary configuration of a system for executing task cooperation processing flows. This diagram illustrates an exemplary system configuration for flow execution.

Fig. 5 is a flow chart illustrating the execution processing of a task cooperation processing flow according to an embodiment.

Fig. 6 is a flow chart explaining discovery processing according to an embodiment.

Fig. 7 is a diagram illustrating an exemplary user interface used for selecting devices executing tasks in a task cooperation processing flow.

Fig. 8 is a flow chart explaining task execution processing according to an embodiment.

Fig. 9 is a flow chart explaining the suspension processing of a task cooperation processing flow according to an embodiment.

Fig. 10 is a diagram providing examples of output data obtained during the course of execution of a task cooperation processing flow.

Fig. 11 is a flow chart explaining flow completion processing according to an embodiment.

Fig. 12 is a diagram illustrating an exemplary method for saving data in a system used for executing task cooperation processing flows.

Fig. 13 is a diagram illustrating an example of a flow management interface used for task cooperation processing flows.

### DESCRIPTION OF THE EMBODIMENTS

Preferred embodiments of the present invention will now be described in detail in accordance with the accompanying drawings.

### <First Embodiment>

First of all, explanations are provided regarding the application configuration and system configuration of the present embodiment.

### [Application Configuration]

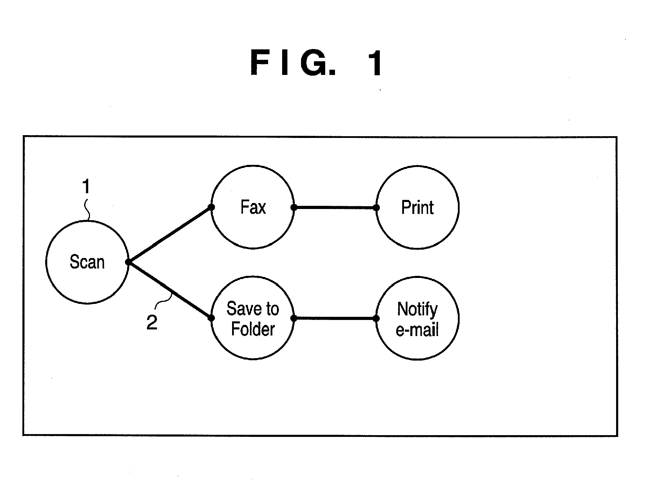

Fig. 1 is a diagram used to explain an editing application for task cooperation processing flows according to the present embodiment. As shown in Fig. 1, a tree-shaped structure is created by interconnecting a plurality of tasks shown by circles 1 with branch-shaped linear elements 2 to form/define a series of processing operations. In this application, the user can easily create a task cooperation processing flow by using a typical graphical user interface system to arrange these tasks (circles 1) and connect them with the linear elements 2 on a display device. It should be noted that in Fig. 1, the linear elements are used to branch the process into two branches, i.e. "Fax → Print" and "Save to Folder → Notify e-mail." In addition, the user interface, including the way task cooperation processing flows are displayed and the procedure for creating such task cooperation flows, is not limited to the above.

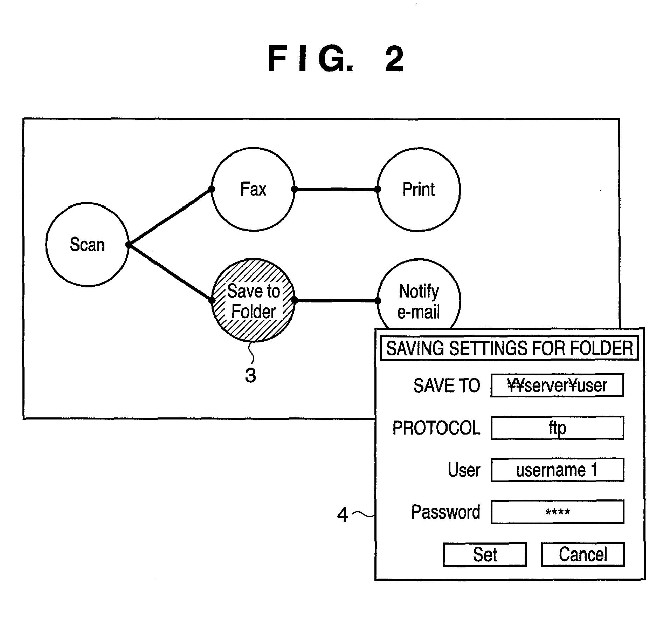

Fig. 2 is a diagram illustrating an exemplary user interface used for configuring the parameters of tasks contained in the task cooperation processing flow illustrated in Fig. 1. Generally speaking, a plurality of parameters are often present as a group within a single task, and the present embodiment provides a user interface capable of listing such parameters. For instance, when tasks are selected in a task cooperation processing flow, a window is displayed for configuring the parameters of the tasks. In the example of Fig. 2, task 3 (Save to Folder) is selected and a parameter setting window 4 of the selected task 3 is displayed. It should be noted that the way the selected task is displayed changes so as to indicate that a corresponding parameter setting window 4 is presented. Note that, the way in which the display of parameter setting window is operated, and the way in which the parameter setting window is displayed, are not limited to these examples.

### [System Configuration]

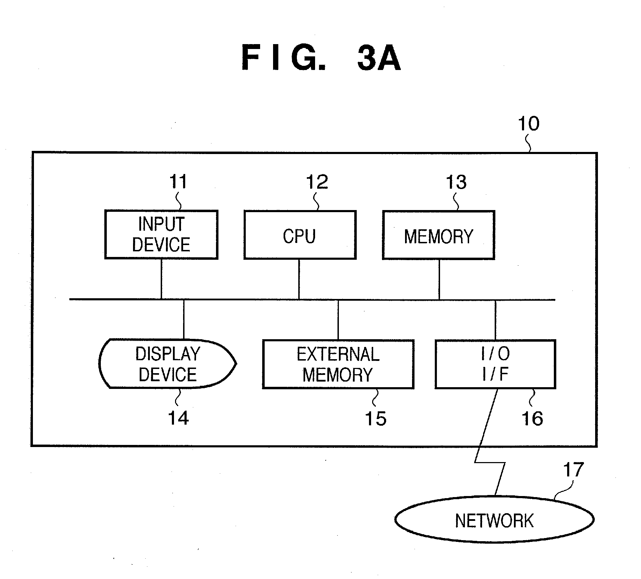

The configuration of the information processing apparatus that executes the above-mentioned application is explained next. Fig. 3A is a block diagram illustrating an exemplary hardware configuration of an information processing apparatus used to execute task cooperation processing flows according to the present embodiment.

The information processing apparatus 10 is a so-called computer system, which has the following configuration. An input device, 11, contains a keyboard and a mouse or another pointing device, with signals corresponding to the user's manipulations accepted by the input device. A CPU 12 is a central processing unit, which implements various types of processing based on control programs stored in a memory 13. The memory 13 is configured to comprise a RAM (random-access memory) and a ROM (read-only memory), and is used as the main memory of the CPU 12. A display device 14 is constituted by a CRT display or a liquid crystal display, etc., and displays various screens under the control of the CPU 12. An external memory 15 has a floppy (registered trademark) disk (FD) drive or a hard disk (HD) etc. and stores, for instance, a plurality of document data to be processed in a task cooperation processing flow. An external I/O interface 16 connects the information processing apparatus 10 to a network 17.

In the above-mentioned configuration, the CPU 12 executes a basic I/O program, an OS, and application programs, thereby allowing the information processing apparatus 10 to operate as a client and a server for the present system. The basic I/O program is stored in the memory 13 (ROM) and the OS is stored in the external memory 15. When the power supply of the information processing apparatus 10 is turned on, the IPL (initial program loading) function of the basic I/O program causes the OS to be read from the external memory 15 to the memory 13 (RAM), starting the operation of the OS.

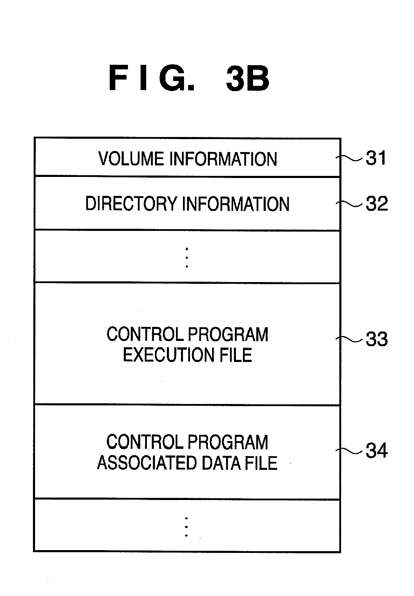

The program code of the program is written such that the CPU 12 executes the processing shown in the illustrated flow chart, which is explained hereinafter. Additionally, in the embodiment, the present control programs and associated data are assumed to be stored on the FD of the external memory 15. An example of organization of data on this FD is shown in Fig. 3B. File management information, such as volume information 31 and directory information 32, etc., is recorded on the FD. The control program execution file 33 (hereinafter, execution file 33) is a control program used by the CPU 12 to execute e.g. the processing shown in the illustrated flow chart, which is described hereinafter. Moreover, a control program associated data file 34 (hereinafter, associated data file 34) is a data file necessary for the execution of various control programs. In the present embodiment, the task processing flow creation application and the task processing flow execution application are supposed to be stored as execution files 33. Moreover, task cooperation processing flows created by the task processing flow creation application are supposed to be stored as the associated data file 34. Also, the execution results obtained by the task processing flow execution application (data used for resuming paused flows, as described hereinafter) are supposed to be stored as the associated data file 34.

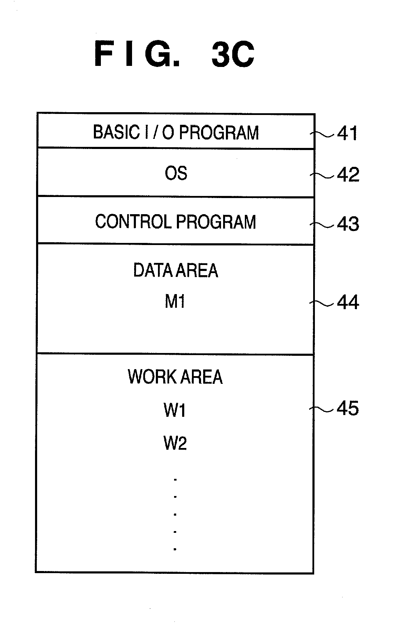

The control program and associated data stored on the FD can be loaded onto this computer system through the FD drive of the external memory 15. Fig. 3C shows a memory map produced when the present control program is loaded into the memory 13 (RAM) and becomes executable. When an FD in placed in the FD drive, as shown in Fig. 3C, the execution file 33 and associated data file 34 on the FD are read and loaded into the memory 13 under the control of the OS 42 and basic I/O program 41, thereby permitting execution by the CPU 12. Here, for instance, the execution file 33 is stored in a control program 43 and the associated data file 34 is stored in a data area 44. A work area 45 is an area used to temporarily hold various data generated when the CPU 12 executes the control program.

It should be noted that although the present embodiment depicted an example, in which the control program and associated data are loaded from an FD directly into the memory 13 and then executed, the program and the associated data may be stored on a hard disk (hereafter referred to as an HD), not shown, and loaded from the HD into the memory 13. Moreover, in addition to the above-mentioned FD and HD, the medium, on which the control program of the present embodiment is recorded, may be an optical disk, an IC memory card, etc. In addition, the present program may be recorded in the ROM of the memory 13 and adapted to be executed directly by the CPU 12.

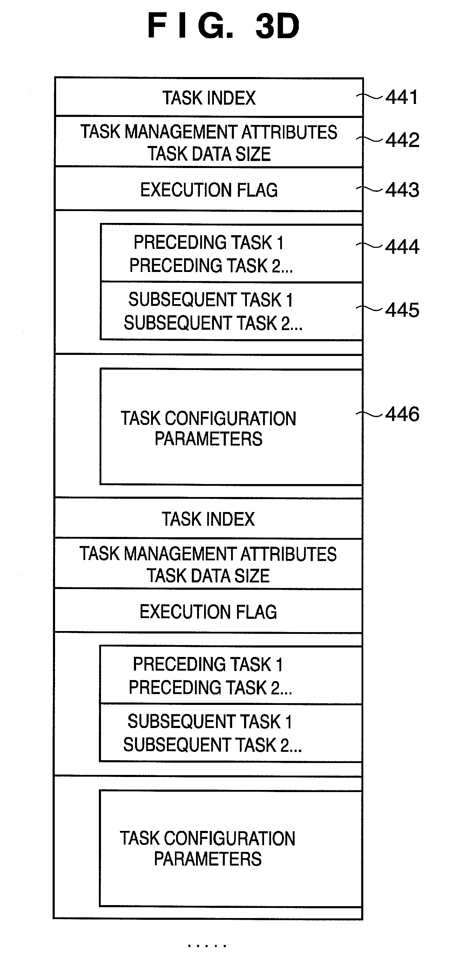

Fig. 3D is a diagram showing an example of the data structure of the task cooperation processing flow obtained when the task cooperation processing flow is saved to memory or to a storage device by the task cooperation processing creation application. As shown in Fig. 3D, the task cooperation processing flow is managed in the form of a list using indexes 441 assigned to each task present in the flow. All the tasks in the system, on which the task cooperation processing flow is executed, are assigned a unique index (ID), so that each task is uniquely identified. Moreover, for each task, registration is carried out for a task 444, which is executed prior to the task, and a task 445, which follows the task, thereby providing for identification of the preceding task and subsequent task for all the tasks. For instance, in the task cooperation processing flow of Fig. 1, with regard to the task "FAX", "Scan" is registered as a task executed prior to the task "Fax", and "Print" is registered as a task executed thereafter. Therefore, tasks can be carried out in the order specified by the task cooperation processing flow either starting from the topmost task, as a matter of course, or from any task in an arbitrary position. Additionally, since a task includes the index of the task that precedes the task and the task that follows the task, it is possible to acquire associated tasks on the tree in a continuous manner.

It should be noted that an execution flag 443 holds a value indicating the processing state of the task, such as FLAG_NONE or FLAG_DONE, as described hereinafter. Task configuration parameters 446 contain parameters configured in the parameter setting window 4 of Fig. 2. Moreover, as described hereinafter, information describing devices executing the task is maintained as part of the configuration parameters 446. The management attributes and data size of the task are held in the area 442. Note that, the task management attributes indicates attributes such as share to all-users, individual and branch. The task management attributes are referred when setting and executing each task during execution of a task cooperation processing flow.

### [System Configuration]

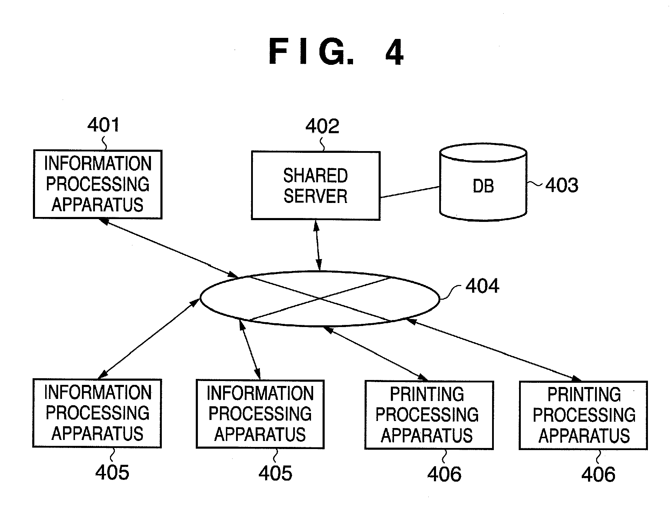

Fig. 4 is a diagram illustrating an exemplary configuration of a system for executing task cooperation processing flows created by the above-described application. The configuration of the information processing apparatuses 401 and 405 is as explained in Fig. 3A, enabling them to run task cooperation processing flow creation applications and task cooperation processing flow execution applications. The user can create and execute a task cooperation processing flow using these applications. Moreover, a task cooperation processing flow created by the information processing apparatus 401 can also be called and executed by the information processing apparatus 405. In such a case, this can be achieved either via a portable-type storage medium, e.g. an FD, or through a shared server, 402, as described hereinafter. In addition, the printing processing apparatuses 406 are multifunctional devices capable of displaying a user interface and assumed to be capable of creating task cooperation processing flows as well as calling and executing task cooperation processing flows. It should be noted that some of the apparatuses in the system shown in Fig. 4 may be configured to be capable of executing either only a task cooperation processing flow creation application or only a task cooperation processing flow execution application.

Moreover, a shared server 402 may be installed in order to share task cooperation processing flows, and the task cooperation processing flows may be registered in a database 403. For instance, a task cooperation processing flow created by the information processing apparatus 401 is registered in the database 403. The system can then be configured such that the information processing apparatus 405 and printing processing apparatus 406 will connect to the shared server 402, download and execute the task cooperation processing flow held in the shared server 402. It should be noted that the network 404 corresponds to the network 17 of Fig. 3A.

### [Execution Processing of Task Cooperation Processing Flows]

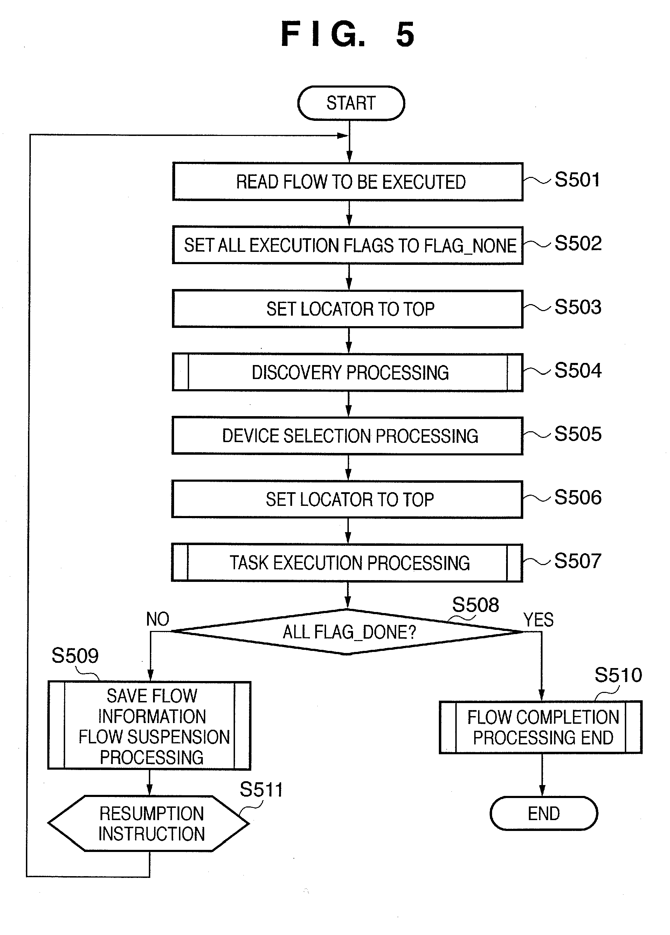

The procedure of the processing taking place when a task cooperation processing flow is executed will be now explained with reference to the flow charts of Figs. 5, 6, 8, 9, and 11.

It should be noted that in the present embodiment explanations are based on the assumption that a task cooperation processing flow execution application running on the computer (information processing apparatus 401) manages the execution of task cooperation processing flows. Moreover, the information processing apparatus 401 is assumed to hold data for the task cooperation processing flow to be executed (Fig. 3D) and execute it using the task cooperation processing flow execution application. Moreover, in case of a system utilizing a shared server 402 etc., the task cooperation processing flow shared by the shared server 402 is supposed to be downloaded to the computer executing the processing flow in advance. These assumptions are aimed at situations, wherein a task cooperation processing flow is executed by the user in an environment different from the user's own regular office environment. In a particularly preferred embodiment, the information processing apparatus 401 is supposed to be a notebook computer that can be carried off the premises and the task cooperation processing flows are supposed to be executed off the premises. However, needless to say, the embodiments are not necessarily limited to such conditions and the system of the present embodiment may operate normally and be useful also in one's own office where there are no obstacles to the execution of task cooperation processing flows.

Fig. 5 is a flow chart illustrating the entire process carried out by the task cooperation processing flow execution application of the present embodiment (processing performed in each step is carried out primarily by the task cooperation processing flow execution application (hereafter referred to as an execution application), which is run by the CPU 12). First of all, in Step S501, the execution application reads a task cooperation processing flow designated for execution. When the task cooperation processing flow is executed for the first time, in Step S502, the execution application clears the execution flags of all the tasks, with which the flow is associated (443 in Fig. 3D, as described in detail hereinafter). In this example, the execution flags of all the tasks are set to FLAG_NONE. In Step S503, the execution application sets a locator indicating the location of processing of the task cooperation processing flow at the top of the flow. Then, in Step S504, the execution application carries out the discovery processing of devices in connection with the task cooperation processing flow.

### [Regarding Device Discovery Processing]

The term "discovery processing" refers to processing which, prior to the execution of a task cooperation processing flow, confirms whether various devices to be used for the task cooperation processing flow operate effectively in the current environment, to which the information processing apparatus 401 is connected. In other words, such processing makes a determination as to whether each task is executable in the current environment. For such confirmation, it is sufficient to detect the capacity of the devices required for task execution for each task of the task cooperation processing flow. For instance, if there is a task cooperation processing flow "Scanning" → "E-mail" → "FAX", then, for example, the following equipment will be discovered as devices capable of handling the respective tasks.

<Examples of devices capable of handling the task "Scanning">
- A USB-connected scanner
- A networked multi-function peripheral

<Examples of devices capable of handling the task "E-mail">
- Devices with a LAN connection (wireless, wired), capable of connecting to a mail server.
- Devices with a modem connection, capable of connecting to a mail server.

<Examples of devices capable of handling the task "FAX">
- Networked printer/copy machines with faxing capability or networked multi-function peripheral
- Modems with faxing capability connected to a telephone line.

During discovery processing, the execution application looks for and finds (discovers) devices necessary for each task of the task cooperation processing flow illustrated in the above example.

It should be noted that such a search can be accomplished using a specific protocol to call software services provided by a device capable of interpreting the protocol. The protocol could be, for instance, the UPnP (Universal Plug-and-Play) standard, the standard promoted by the DLNA (Digital Living Network Alliance), which is an open consortium using UPnP, or the Jini Lookup Service provided by Jini, etc. Since the technology used by these standards to discover various services is publicly known, a detailed discussion thereof is omitted here.

Alternatively, various device drivers may use interfaces to LAN and USB devices so as to communicate with the devices using unique protocols, acquire device information directly from the devices, and use it for searches without being limited to using a specific protocol. Accordingly, there are no particular limitations on device search methods during discovery.

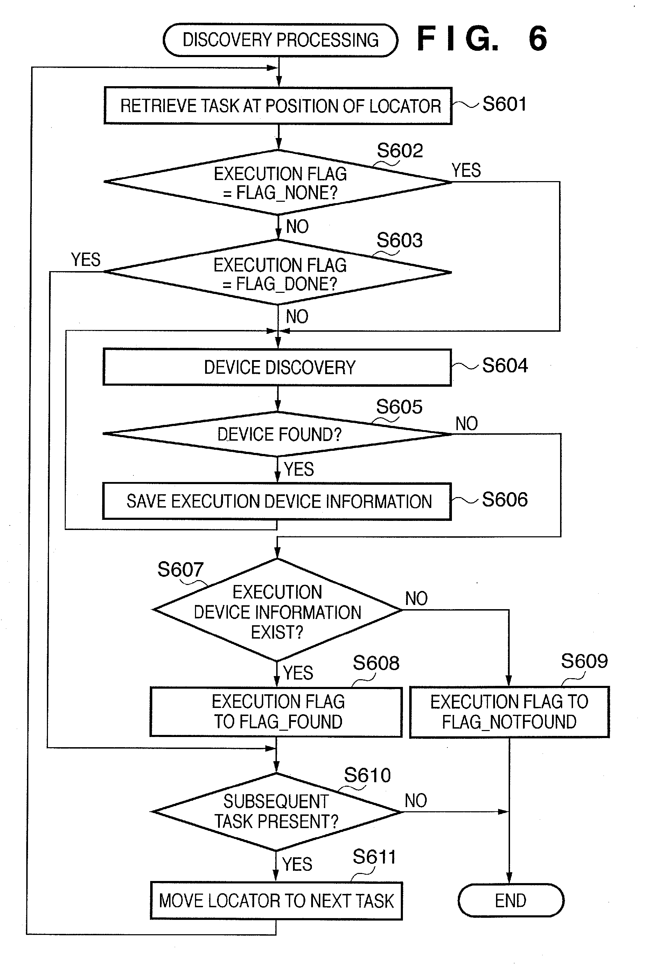

The discovery processing that takes place in Step S504 will be now explained with reference to the flow chart of Fig. 6. As described above, devices necessary for the execution of each task contained in the task cooperation processing flow to be executed are detected during discovery processing.

First of all, in Step S601, the execution application reads task information from the position of the locator set at the top of the task cooperation processing flow in Step S503 from memory 13. The configuration of the task cooperation processing flow is as explained in Fig. 3D and, at this moment in time, the locator points to the index 441 of the task at the top of the task cooperation processing flow. After one task has been retrieved, the data structure illustrated in Fig. 3D (subsequent task 445, etc.) is used to retrieve, and perform discovery processing on, tasks starting from the top of the flow towards its end by following the link structures between the tasks. Because device discovery processing determines the executability of each single task, in case of the data structure such as the one in Fig. 3D, a determination can be made as to the point execution can reach by starting from the top of the task tree formed by the task cooperation processing flow. The processing involved in the determination of executability for each individual task is as follows.

If the device discovery processing for a task acquired in Step S601 has been completed, the execution flag 443 should have a value other than FLAG_NONE. Therefore, in Step S602, to avoid performing discovery processing twice, the execution application confirms whether the execution flag 443 is FLAG_NONE. In addition, since suspension/resumption processing, to be described hereinafter, also makes use of the discovery processing of Fig. 6, in Step S603, the execution application makes a determination as to whether FLAG_DONE is stored in the execution flag 443. Tasks having FLAG_DONE stored in the execution flags 443 have already been executed and therefore do not have to undergo discovery processing. Consequently, the execution application proceeds processing from Step S603 to Step S610 and, if a subsequent task is present, advances the locator to the following task.

If the execution flag is FLAG_NONE, or a value other than FLAG_DONE, processing proceeds to Step S604. In Step S604, the execution application carries out device discovery processing on the task retrieved in Step S601. If a device is acquired as a result of discovery, processing proceeds from Step S605 to Step S606 and information on the device is stored in a "device information area", not shown, which is a memory space attached to the task. Because a plurality of devices may be found, in this case, it is preferable to use a variable-length memory area as the device information area storing information on discovered devices.

Although the function classification (e.g. Scan, FAX, etc.) used to classify tasks is checked for executability during discovery, more detailed function checks may be performed as well. Namely, a detailed check of the services provided by the devices may be considered in order to make a firm determination as to the executability (e.g. whether color scanning is possible or not) of the tasks based on the parameters of the tasks.

Moreover, even if one device is located by discovery processing, processing does not stop immediately and a confirmation is obtained as to whether all devices capable of executing the task have been found (the loop in Steps S604-S606). When discovery based on the loop of Steps S604-S606 is complete, processing proceeds to Step S607. If at least one device capable of executing a task is found as a result of the above-described discovery, processing proceeds from Step S607 to Step S608 and the execution application sets up FLAG_FOUND as the value of the execution flag 443 attached to the task. Then, in Step S610, the execution application, based on the data structure illustrated in Fig. 3D, obtains confirmation as to whether there is a subsequent task for the task. If there is a subsequent task, then, in Step S611, the locator is moved to the subsequent next task, processing returns to Step S601, and the above-described discovery processing is reiterated. In addition, if no devices can be detected, processing proceeds from Step S607 to Step S609, the execution application sets a FLAG_NOTFOUND value in the execution flag 443, and the subsequent task linked to the task is not subjected to discovery.

Based on the above processing, device discovery can be executed within the executable range in the current environment for a series of tasks without branching. It should be noted that when a branched flow, such as the one shown in Fig. 1, is handled, it is sufficient to carry out processing such that searching all branches is enabled, for instance, by dividing the locator in two at the site of branching and placing locators on the respective branches. Since such processing is obvious to a person skilled in the art, explanations are omitted here.

Based on the above discovery processing, the execution flag 443 of the task within the executable range from the top of the flow tree is set to FLAG_FOUND. In addition, because the execution flag 443 of the non-executable task is changed to FLAG_NOTFOUND and the task that follows the task with the FLAG_NOTFOUND value does not undergo discovery processing, the flag maintains the initial value of FLAG_NONE.

### [Task Execution Processing]

The execution processing of the tasks whose execution flags 443 have been set to FLAG_FOUND as a result of the above-mentioned discovery processing is carried out next. The execution processing is carried out as described hereinafter.

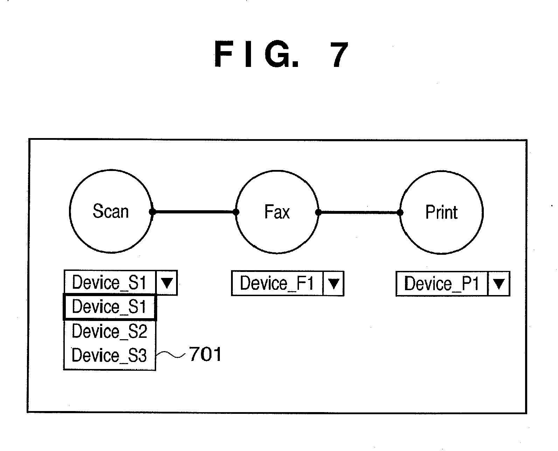

If a plurality of devices have been detected by discovery processing for at least one or more tasks, it is necessary to choose the device to be used. Thus, the actual device to be used for each task whose execution flag 443 has been set to FLAG_FOUND is chosen in Step S505 in Fig. 5. During the selection, the user may be allowed to select one device for each task from among the discovered devices by displaying a user interface such as the one in Fig. 7. In the user interface of Fig. 7, a pull-down list 701 is displayed, which identifies devices discovered for each task. The user can select the desired device to be used in processing each task from the pull-down list 701. Otherwise, the device with the highest capacity may be automatically selected by the system and used in the execution of the processing flow. In any case, a single respective device is selected and device information on the selected device is held as "Execution device information" for each task whose execution flag 443 has been set to FLAG_FOUND in the course of discovery processing. The execution device information is held, for instance, as part of the configuration parameters 446 of the task. After that, in Step S506, the execution application again sets the locator to the topmost task of the task cooperation processing flow. Then, in Step S507, the execution application carries out successive task execution based on information on the preceding task 444 and subsequent task 445.

During task execution processing in Step S507, the task cooperation processing flow is executed within the executable range by executing tasks whose execution flags have been set to FLAG_FOUND in the course of the above-mentioned discovery processing, in other words, tasks determined to be executable.

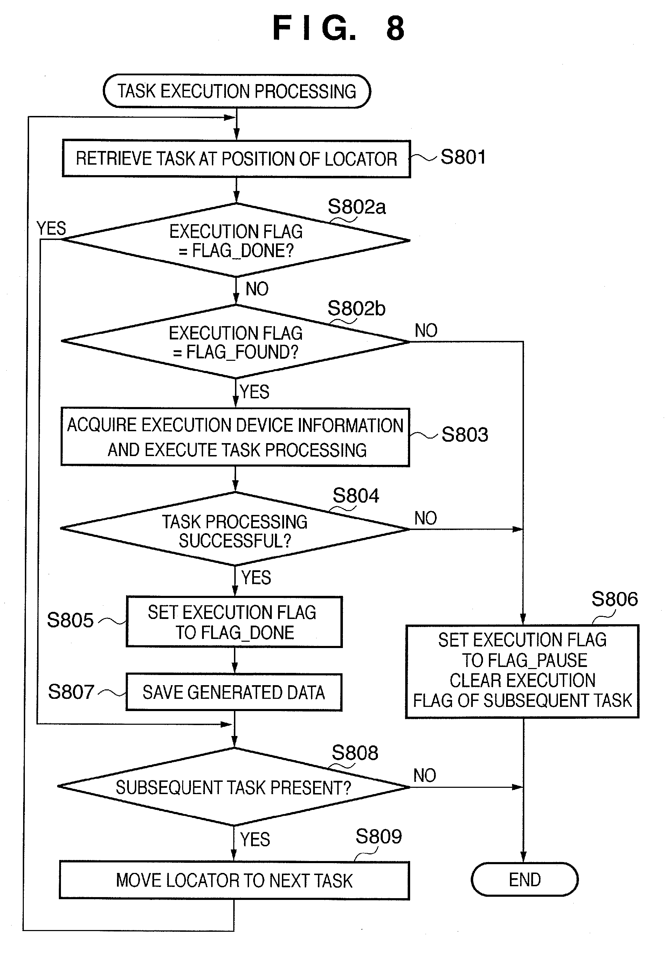

The task execution processing that takes place in Step S507 will be now explained in detail with reference to the flow chart of Fig. 8.

First of all, in Step S801, the execution application retrieves information on the task indicated by the locator from the memory 13, and, in Step S802a, the execution application makes a determination as to whether the execution flag 443 of the task has been set to FLAG_DONE. If the execution flag 443 is FLAG_DONE, the task has already been executed. Therefore, the execution application advances processing to Step S808 and moves the locator to the subsequent task if there is a subsequent task. Based on such processing, already executed tasks can be prevented from being reexecuted upon resumption of a paused task cooperation processing flow. If in Step S802a the execution flag 443 is not FLAG_DONE, then, in Step S802b, it is determined whether the execution flag 443 of the task is FLAG_FOUND. If it is determined that the execution flag 443 is FLAG_FOUND, then, in Step S803, the execution application acquires task execution device information and executes the processing of the task using the device specified by the execution device information. It should be noted that since the execution of task processing is a matter of common knowledge, a detailed explanation thereof is omitted.

In Step S804, it is determined whether the task processing executed in Step S803 has been successful. The execution flag 443 of the task is replaced with FLAG_DONE in Step S805 if it is determined that task processing has been successful. Then, in Step S807, the data generated by the execution of the task is stored in a specific location that can be recognized by the present task cooperation processing flow execution system. Namely, the execution application saves the output data of the task executed in Step S803 to a prescribed memory area. After that, in Step S808, the execution application uses task information (subsequent task 445) to determine whether there is a subsequent task. If there is a subsequent task, then, in Step S809, the execution application moves the locator to the next task and reiterates processing starting from the above-mentioned Step S801.

On the other hand, if an execution error occurs during task processing due to device trouble etc., in Step S804, it is determined that task processing has failed. If it is determined that task processing has failed, in Step S806, the execution application changes the execution flag 443 of the error-causing task to FLAG_PAUSE. The execution device information and execution flags 443 of all the tasks subsequent to the failed task are then cleared. In the present embodiment, the execution flags 443 of all the tasks subsequent to the failed task are set to FLAG_NONE, and the execution device information is deleted from the configuration parameters 446 of the tasks. It should be noted that all tasks subsequent to the failed task can be acquired by tracing the tasks with account taken of information on the preceding tasks 444 and subsequent tasks 445, as described above.

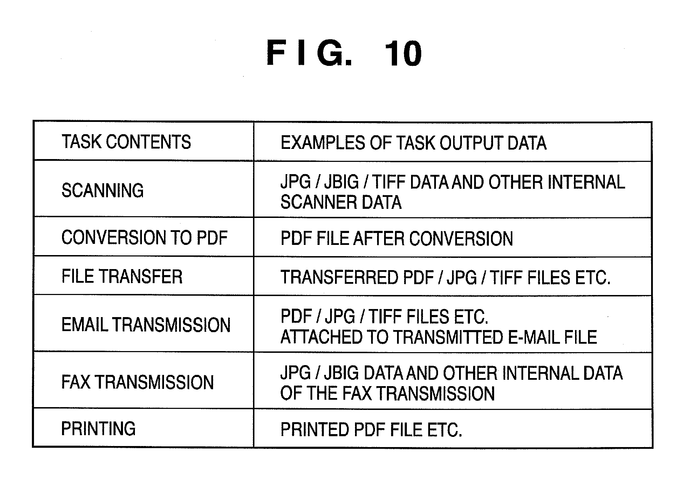

Here, examples will be provided to explain data generated as a result of task execution. Let us consider data shown in Fig. 10, which are generated by tasks constituting elements of the task cooperation processing flow. Task cooperation processing flows are characterized in that data generated by the execution of tasks, i.e. the outputs of tasks, are used as inputs by the subsequent tasks and tasks are processed in a continuous manner. Therefore, all of the data (output data) generated by each task, as shown in Fig. 10, have to be maintained.

It should be noted that if an execution flag 443 is determined to be anything other than FLAG_FOUND in Step S802b, it becomes impossible to continue executing subsequent tasks along the same tree branch and thus subsequent tasks are not executed for that locator. Thus, in Step S806, the execution flag of the task is changed to FLAG_PAUSE, which indicates that execution has been paused.

As mentioned above, in Step S507, processing goes through executable tasks along all the tree branches of the task cooperation processing flow. Then, in Step S508, it is determined whether there are tasks other than tasks with FLAG_DONE execution flags 443 among all the tasks in the task cooperation processing flow. If there is a task with an execution flag 443 other than FLAG_DONE, in Step S509, the execution application registers the paused task cooperation processing flow by saving information on the task cooperation processing flow being executed at this point in time to the external memory 15. Namely, if completion of the task cooperation processing flow by means of the above-described task execution processing (S507) proves impossible, the task cooperation processing flow is registered as paused along with inexecution information (the execution flag 443 set to a value other than FLAG_DONE) describing unexecuted tasks. During the registration of the paused task cooperation processing flow, the processing flow may be saved in its entirety (Fig. 3D) and may be registered using an ID (or a file name, etc.) identifying the processing flow. Moreover, the execution application saves the output data which were generated by executing the tasks in Step S803 and saved in Step S807, to a prescribed memory area for the purpose of resuming the task cooperation processing.

### [Suspension Processing of Task Cooperation Processing Flows]

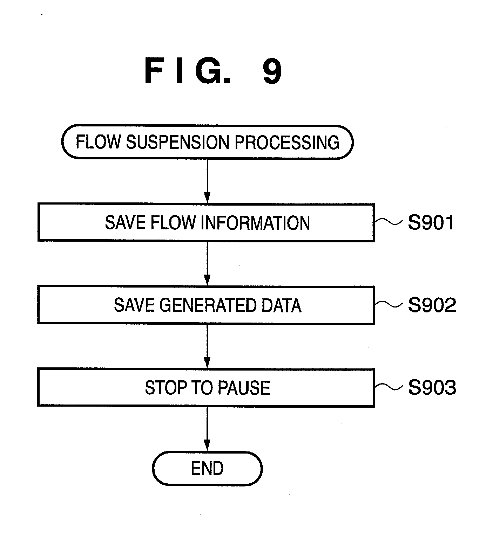

The suspension processing of the task cooperation processing flow that takes place in Step S509 will be now explained with reference to the flow chart of Fig. 9. First of all, in Step S901, the execution application saves information on the currently executed task cooperation processing flow, that is, the form of the processing flow tree and the task linking method, as well as the execution parameters of the tasks as specified at execution time. It should be noted that the expression "as specified at execution time" means that if details concerning the parameters of each task are specified at execution time, the specified parameters are saved as specified. With regard to such parameter specification, the way parameters are specified changes at each execution depending on the intent of the user. However, it is assumed that the intent here is to restore parameters specified during the previous execution when execution is continued the next time. Moreover, the values FLAG_DONE and FLAG_PAUSE of the execution flags 443 for each task are saved by attaching them to the tree. Doing so makes it possible to save information on tasks that have been executed by the time of saving. This is used as inexecution information describing unexecuted tasks in a paused task cooperation processing flow. Next, in Step S902, the execution application saves tasks in association with data obtained during task execution processing, generated by each task (data saved in Step S807). Then, in Step S903, the execution application temporarily stops the execution of the flow to pause the processing flow. It should be noted that the way in which data is retained during the data retention processing described above is merely an example and the invention is not limited thereto. In short, when a paused processing flow is resumed, it is sufficient to be able to recognize unprocessed tasks and obtain output data from processed tasks necessary for executing the unprocessed tasks.

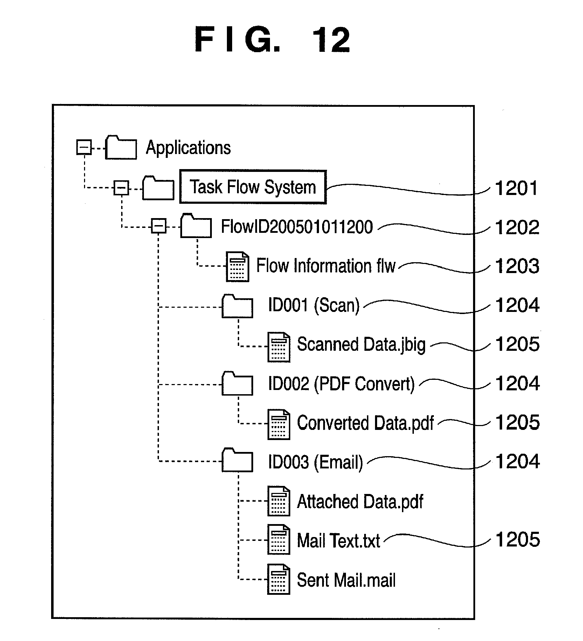

Next, a specific example of the method used to store various data generated by the task cooperation processing flow in the above-mentioned Steps S901 and S902 is explained with reference to Fig. 12. First of all, a directory 1202 used for storing the execution data of the flow being executed is created in the file system location (typically, directory) 1201 of the computer, to which the execution application is assigned. Depending on the number of flows paused in the system, there may be a plurality of such directories 1202. As far as the names of the directories 1202 are concerned, it is sufficient to use the precise execution starting times of the tasks.

Information on the above-mentioned currently executed flow (hereafter referred to as flow information) is first stored as a file 1203 in the directory 1202 corresponding to the task processing cooperation flow. Information on this flow, as described above, contains execution flags and task IDs and link structures linking tasks to each other, as shown in Fig. 3D. Furthermore, subdirectories 1204 with names comprising task IDs are created within the directory 1202 for each task contained in the task cooperation processing flow. Data generated by the execution of the corresponding tasks is stored in the subdirectories 1204 as files 1205. When a plurality of pieces of data are produced for a single task, a file is created for each piece of data. Preferably, the file name of each one of these files represents the type of data used in the task. In other words, it is desirable to enable the system to identify the type of data by the file name.

For instance, in case of an email transmission task, e-mail data itself is saved in the file name "Sent Mail.mail" and the text information data of the e-mail message is saved under a fixed file name "Mail Text.txt". Because the tasks themselves are discriminated on the basis of identification numbers, even though these file names are fixed names, it is still possible to unambiguously determine what kind of data is used in which task. Of course, the present invention is not limited to this embodiment, and variable file names can be managed in association with flow data as well.

### [Paused Flow Resumption Processing]

Next, explanations are provided regarding the process of resuming the flow processing paused in Step S509. As mentioned above, in a task cooperation processing flow execution system, execution processing is carried out on executable tasks based on determination of executability and execution results are saved without performing other processing. Also, the execution results are saved without performing any processing on tasks whose execution leads to errors and the subsequent tasks. Consequently, the execution of the entire tree of the task cooperation processing flow can be completed by performing the resuming (resume) execution later.

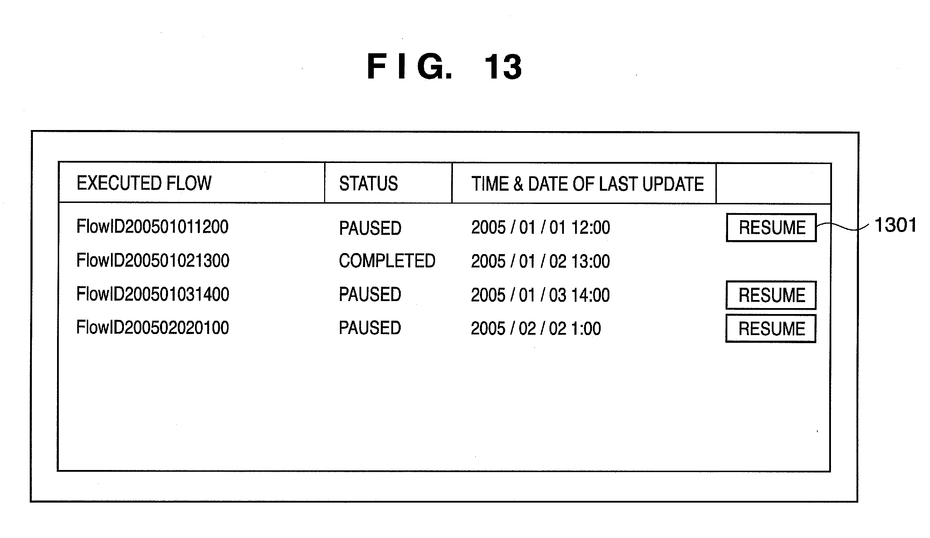

As an example, the task cooperation processing flow execution application of the present embodiment displays a list of paused processing flows on the user interface shown in Fig. 13. This display can inform the user of the processing flows that have been paused. Resumption buttons 1301 are provided for the paused task cooperation processing flows. It is contemplated that an instruction to resume a paused flow is then issued by pressing (clicking) the resumption button 1301 corresponding to the desired paused task cooperation processing flow on the user interface.

After an instruction to resume the paused task cooperation processing flow is issued based on the user's input, processing returns from Step S511 to Step S501 in Fig. 5. The processing that follows the resumption of the paused task cooperation processing flow is similar to the processing depicted in the above-described flow charts of Figs. 5, 6, 8, and Fig. 9. In other words, at the point in time when an instruction to resume the task cooperation processing flow is issued, the processing of the flow starts and device discovery is carried out (Step S504, Fig. 6). Because no detection of execution devices is performed during discovery processing for tasks whose execution flag is FLAG_DONE, during flow resumption processing, the operation targets unprocessed tasks. Execution processing is then carried out using devices discovered in the course of discovery processing (Steps S505-S507, Fig. 8). Thus, processing is resumed starting from the executed portion and is carried out on the unprocessed portion of the paused task cooperation processing flow. In other words, processing is executed as a continuation of the processed portion of the task cooperation processing flow.

Moreover, if non-executable tasks are found during device discovery processing at the time of resumption due to a shortage of devices, etc., suspension processing is carried out in the same manner as during the initial execution described above (Steps S508 and S509, Fig. 9). As a result of such processing, even if a paused flow is resumed and then must revert to the paused state again, continued task processing becomes possible based on applying the same procedure as the above-described processing flow resumption processing when execution is carried out next time.

As mentioned above, based on the inexecution information saved in Step S901 and output data saved in Step S902, the task execution application resumes the paused task cooperation processing flow registered in the course of flow suspension processing in Step S509.

### [Processing Flow Completion Processing]

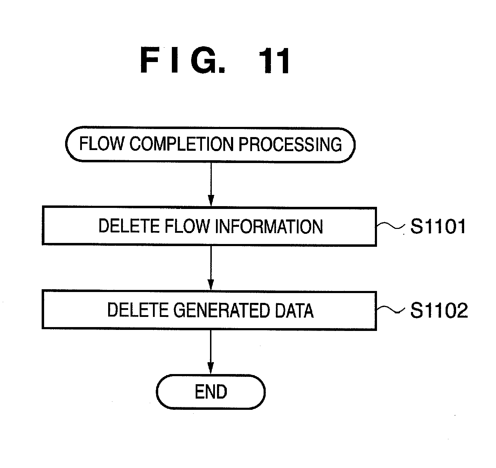

If it is determined in Step S508 that the execution flags of all the tasks are FLAG_DONE, then the task cooperation processing flow is judged to be complete. In this case, the execution application performs flow completion processing in Step S510. Fig. 11 is a flow chart explaining the flow completion processing. In Step S1101, the execution application deletes the flow execution state data saved in Step S901. Then, in Step S1102, the execution application deletes all data, etc. saved in Step S902, which were generated in the course of processing the task cooperation processing flow. As a result, no more paused flows are recognized in the system and flow execution is fully accomplished.

It should be noted that although in the above-mentioned first embodiment executability was determined based on discovery processing for all the tasks together and execution was carried out in the executable range depending on which executable tasks were present in the processing flow, the invention is not limited thereto. Needless to say, task executability may be determined right away whenever a task is executed according to a processing flow. In short, when the information processing apparatus executes a processing flow, it is sufficient to execute the executable range in accordance with tasks executable in the current environment.

### <Second Embodiment>

In the above-mentioned first embodiment, processing was explained on the assumption that the task cooperation processing flow execution system was operated by a computer or another information processing apparatus. However, it also contemplated that the task cooperation processing flow execution system is constituted either by computers and devices, such as a printing processing apparatus, etc., or by devices alone. If the task cooperation processing flow execution system is operated using a device, the execution application may be stored on a fixed disk or another storage medium in the device and task cooperation processing flows to be executed may be stored on separate detachable storage media and made portable. Alternatively, for each application to be run, it may be recorded on detachable storage media. Here, it is assumed that at the least task cooperation processing flows are recorded on portable-type storage media such as a USB memory, etc.

In such a case, when a USB memory is connected to the device, task cooperation processing flows stored therein can be selected and read by the task cooperation processing flow execution system executed on the device. The device, on which the task cooperation processing flow is executed, carries out the execution processing explained in the above-mentioned first embodiment based on the task cooperation processing flow read from the USB memory. In this case, the output data of each task generated in the course of execution processing and all information generated upon suspension of the processing flow (inexecution information and information on paused task cooperation processing flows) are stored in the connected USB memory in accordance with the procedure explained in the above-mentioned first embodiment. Therefore, the paused task cooperation processing flows can be executed by installing the USB memory in another computer or device.

According to the second embodiment described above, transporting compact portable-type storage media makes it possible to execute task cooperation processing flows in different locations without moving the entire flow execution environment. In addition, greater convenience is secured because the suspension and resumption processing of task cooperation processing flows can be carried out in different locations by saving flow information and output data obtained in the course of processing on storage media.

### <Third Embodiment>

The first and second embodiments above were based on the assumption that task cooperation processing flows were maintained in the information processing apparatus or printing processing apparatus, etc. However, the invention is not limited to such embodiments and the task cooperation processing flows may be maintained on the shared server 402, with the information processing apparatus and printing processing apparatus executing the task cooperation processing flows by downloading them from the shared server 402. In such a case, the flow information and output data generated in the course of execution of the task cooperation processing flows are sent from the execution system (information processing apparatus (PC) and devices) to the shared server 402, and the shared server 402 manages them. If a task cooperation processing flow is paused, the saving of the output data (S902) and registration of inexecution information and task cooperation processing flow (S901) is carried out on the shared server 402. It should be noted that the shared server 402 may directly rely on the information processing apparatus and printing processing apparatus for task execution and substantially the task cooperation processing flow execution system may itself reside in the server.

Because in the third embodiment the flow information and output data generated in the course of execution of the task cooperation processing flows are stored in the shared server 402, the task cooperation processing flows can be executed and paused from different locations without the need to transport the memory and execution system. Therefore, greater convenience is secured because the task cooperation processing flows can be executed at any time so long as the environment permits logging in to, and communicating with, the shared server used for the target task cooperation processing flows to be used.

It should be noted that when a paused task cooperation processing flow is registered on the shared server 402, the ID of the paused task cooperation processing flow may be used.

### <Fourth Embodiment>

Although the above-described embodiments were configured to permit resumption of paused task cooperation processing flows on a one-at-a-time basis (selecting flows and resuming processing one by one), the invention is not limited thereto. For instance, all paused task cooperation processing flows may be resumed at once. Alternatively, the configuration may permit arbitrary selection of a plurality of paused task cooperation processing flows on the user interface as well as permit resumption of a plurality of selected task cooperation processing flows together.

The fourth embodiment allows for resumption instructions to be issued for a plurality of paused task cooperation processing flows taken collectively. For this reason, even if the number of paused task cooperation processing flows increases, the operation of selection of task cooperation processing flows can be reduced in complexity to insure greater convenience.

### <Fifth Embodiment>

In the execution applications of the above-described embodiments, resumption processing was carried out based on an explicit instruction to "resume" a paused task cooperation processing flow issued by the user to the system (or device). The execution application according to the fifth embodiment automatically executes such resumption processing. In other words, the execution application of the fifth embodiment automatically and periodically attempts to resume task cooperation processing flows paused in the system.

It should be noted that the system of the fifth embodiment may be based on an information processing apparatus such as the one in the first embodiment. In such a case, the presence of paused task cooperation processing flows is confirmed by the execution application installed in the information processing apparatus, for instance, by detecting managed flow information (file 1203).

Alternatively, the resumption processing arrangement of the fifth embodiment can be applied to the configuration of the second embodiment, wherein the system is based on the use of a printing processing apparatus. In such a case, the presence of paused task cooperation processing flows may be confirmed by searching the contents stored on portable-type storage media and fixed storage media accessible to the printing processing apparatus.

Furthermore, the resumption processing of the fifth embodiment can also be applied to the system of the third embodiment, which is based on the use of a shared server. In such a case, the presence of paused task cooperation processing flows may be confirmed by searching for paused task cooperation processing flows managed by the shared server.

In any configuration, automatic processing services and other functionality incorporated into the basic system software (OS) of the equipment is used by the task cooperation processing flow system for continuous periodic time measurement and searching for paused task cooperation processing flows at regular intervals. If a paused task cooperation processing flow is found, the system tries to resume it. At such time, in order to re-execute the paused task cooperation processing flow more safely, the system may ask the user whether the paused task cooperation processing flow should be resumed.

The fifth embodiment offers greater convenience in that the paused task cooperation processing flow can be completed automatically, without the user forgetting about it. Moreover, greater convenience is secured by the fact that the resumption of the task cooperation processing flow in an undesirable environment can be prevented if the system is configured to perform resumption upon obtaining authorization from the user.

As explained above, in the first to fifth embodiments,
- task cooperation processing flows can be executed and document processing can be started regardless of location,
- processing that can be executed right away can be executed first among processing operations defined by a task cooperation processing flow,
- the remaining portion of the task cooperation processing flow, with the exception of the tasks already executed as described above, can be executed later, and
- the user does not need to manage processed tasks on a document-by-document basis and the difficulty of management does not increase even if the number of projects (= documents) at hand increases. Therefore, a task cooperation processing flow execution system can be implemented that is suited to, and desirable for, office environments subject to on-going process re-engineering.

Although some embodiments have been described in detail above, the present invention can contemplate embodiments such as, for instance, systems, devices, methods, programs, or storage media, etc. Specifically, it may be applied to a system composed of a plurality of devices, as well as applied to an apparatus constituted by a single piece of equipment.

It should be noted that the present invention includes cases, wherein the functionality of the above-described embodiments is realized by supplying a software program to the system or apparatus directly or remotely and allowing the computer of the system or apparatus to read and execute the supplied program code. In such a case, the supplied programs correspond to the flow charts depicted in the drawings of the embodiments.

Therefore, due to the fact that the functional processing of the present invention is implemented with the aid of a computer, the program code installed on the computer is itself an implementation of the present invention. In other words, the present invention comprises a computer program used to implement the functional processing of the present invention.

In such a case, as long as it possesses the program's functionality, it may take various forms, such as object code, interpreter-executed programs, script data supplied to the OS, etc.

The following is suggested as the storage media used for supplying the program. For example, this may be a floppy (trade mark) disk, a hard disk, an optical disk, a magneto-optical disk, an MO, a CD-ROM, a CD-R, a CD-RW, a magnetic tape, a non-volatile memory card, ROM, or a DVD (DVD-ROM, DVD-R), etc.

In addition, connecting to an Internet homepage using a browser on a client computer and downloading the computer program of the present invention from the homepage onto a hard disk or another storage medium is suggested as a method of supplying the program. In such a case, the downloaded program may be a compressed file with self-installation functionality. Moreover, it can also be implemented by dividing the program code constituting the program of the present invention into a plurality of files and downloading the respective files from different homepages. In other words, WWW servers that allow a plurality of users to download program files used to implement the functional processing of the present invention on the computer are also included in the present invention.

Moreover, it may take the form of encrypting the program of the present invention, storing it on CD-ROMs or other storage media, and disseminating it among users. In such a case, users who meet certain criteria may be allowed to download key information used to decrypt the encryption from a homepage through the Internet and use the key information to execute the encrypted program and install the program on a computer.

Moreover, in addition to implementing the above-described functionality of the embodiments based on the execution of read-in program by the computer, the functionality of the embodiments may be implemented based on the instructions of the program in cooperation with an OS etc. running on the computer. In such a case, the OS etc. carries out either part or all of the actual processing and the above-described functionality of the embodiments is implemented based on such processing.

Furthermore, either part or all of the above-described functionality of the embodiments may be implemented by recording the program that is read from the storage media in the memory provided in an expansion unit connected to the computer or an expansion board inserted into the computer. In such a case, after the program has been written to the expansion board or expansion unit, the CPU etc. provided in the expansion board or expansion unit carries out either part or all of the actual processing based on the instructions of the program.

Based on the present invention, a task cooperation processing flow can be started regardless of location and the state of its execution can be easily managed.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
An information processing apparatus, which executes a processing flow that defines cooperation processing of a plurality of tasks, determines, for each task, whether it can be executed in the current environment and executes the tasks determined to be executable, and, based on that, executes the processing flow within the executable range while saving the output data of the executed tasks. If, as a result of execution, it is impossible to complete a processing flow, the processing flow, along with inexecution information describing an unexecuted task, is registered as paused. The registered paused processing flow is then resumed based on the inexecution information and output data.

## Claims

1. An information processing apparatus executing a processing flow that defines cooperation processing of a plurality of tasks, the apparatus comprising:
determination means configured to determine, for each task, whether it can be executed in the current environment or not;
execution means configured to execute the processing flow within the executable range by executing a task determined to be executable by the determination means;
save means configured to save output data from the task executed in the execution means;
registration means configured to register the processing flow, along with inexecution information describing an unexecuted task, as paused if the execution means could not complete the processing flow; and
resume means configured to resume the paused processing flow registered by the registration means using the inexecution information and output data.

2. The apparatus according to claim 1, wherein
the resume means is configured to render the determination means, execution means, save means, and registration means operational with respect to a task identified based on the inexecution information in the paused processing flow.

3. The apparatus according to claim 1, wherein
the resume means is configured to provide an interface allowing the user to select the processing flow to be resumed from among the paused processing flows registered by the registration means.

4. The apparatus according to claim 1, wherein
the determination means comprises a search means configured to search for a device capable of task execution for each task, and the determination means configured to determine that the task can be executed if an execution-capable device is located by the search means.

5. The apparatus according to claim 4, wherein
the determination means is configured to provide a user interface allowing the user to select the device to be used for task execution by the execution means with respect to a task, for which a plurality of execution-capable devices are located by the search means.

6. The apparatus according to claim 1, wherein
the saving of the output data by the save means and the registration of the processing flow and inexecution information by the registration means are carried out on a portable-type storage medium connected to the information processing apparatus.

7. The apparatus according to claim 1, wherein
the saving of the output data by the save means and the registration of the processing flow and inexecution information by the registration means are carried out on an external server unit, to which the information processing apparatus is connected.

8. The apparatus according to claim 1, wherein
the resume means is configured to collectively resume paused processing flows registered by the registration means.

9. The apparatus according to claim 1, wherein
the resume means is configured to periodically and automatically attempt to resume the paused processing flow registered by the registration means.

10. An information processing method based on an information processing apparatus executing a processing flow that defines cooperation processing of a plurality of tasks, the method comprising the steps of:
determining, for each task, whether it can be executed in the current environment or not;
executing the processing flow within the executable range by executing a task determined to be executable in the determination step;
saving output data from the task executed in the execution step;
registering the processing flow, along with inexecution information describing an unexecuted task, as paused if it is impossible to complete the processing flow in the execution step; and
resuming the paused processing flow registered in the registration step using the inexecution information and output data.

11. The method according to claim 10, wherein
the resumption step carries out the determination, execution, saving, and registration steps with respect to a task identified based on the inexecution information in the paused processing flow.

12. The method according to claim 10, wherein
the resumption step provides an interface allowing the user to select the processing flow to be resumed from among the paused processing flows registered in the registration step.

13. The method according to claim 10, wherein
the determination step comprises a step of searching for a device capable of task execution for each task, and determines that the task can be executed if an execution-capable device is located in the search step.

14. The method according to claim 13, wherein
the determination step provides a user interface allowing the user to select the device to be used for task execution in the execution step with respect to a task, for which a plurality of execution-capable devices are located in the search step.

15. The method according to claim 10, wherein
the saving of the output data in the saving step and the registration of the processing flow and inexecution information in the registration step are carried out on a portable-type storage medium connected to the information processing apparatus.

16. The method according to claim 10, wherein
the saving of the output data in the saving step and the registration of the processing flow and inexecution information in the registration step are carried out on an external server unit connected to the information processing apparatus.

17. The method according to claim 10, wherein
the resumption step collectively resumes paused processing flows registered in the registration step.

18. The method according to claim 10, wherein
in the resumption step, periodic and automatic attempts are made to resume the paused processing flow registered in the registration step.

19. A control program used to execute the information processing method according to claim 10 on a computer and stored on a computer-readable storage medium.

20. A computer-readable medium, which stores a control program used to execute the information processing method according to claim 10 on a computer.
